Europäisches Patentamt

(19) European Patent Office

Office européen des brevets

(11) Publication number: **0 057 478**
**B1**

(12) **EUROPEAN PATENT SPECIFICATION**

(45) Date of publication of patent specification: **09.04.86**

(21) Application number: **82200030.3**

(22) Date of filing: **13.01.82**

(51) Int. Cl.⁴: **A 22 C 7/00**

(54) **Method and apparatus for shaping raw hams in relative moulds, after deboning and sewing.**

(30) Priority: **04.02.81 IT 4680981**

(43) Date of publication of application:
**11.08.82 Bulletin 82/32**

(45) Publication of the grant of the patent:
**09.04.86 Bulletin 86/15**

(84) Designated Contracting States:
**AT BE CH DE FR GB IT LI LU NL SE**

(56) References cited:
**DE-A-2 256 078**
**FR-A-2 411 569**
**US-A-2 397 446**
**US-E- 28 106**

(73) Proprietor: **MACCHINE SONCINI ALBERTO S.p.A.**
**1 Via Pezzani**
**I-43013 Langhirano (Parma) (IT)**

(72) Inventor: **Soncini, Alberto**
**1, Via Pezzani**
**I-43013 Langhirano (Parma) (IT)**

(74) Representative: **Corradini, Corrado**
**STUDIO SECCHI & CORRADINI 4, Via Dante Alighieri**
**I-42100 Reggio Emilia (IT)**

Courier Press, Leamington Spa, England.

**Description**

This invention relates to the processing of pork for the preparation of raw deboned hams, and in particular to the pressing-shaping operation in suitable moulds included in the normal operating cycle immediately after the deboning operation, and downstream of the sewing operation on the meat mass.

It is well known that in the preparation of deboned hams, the meat mass is cut to enable the bone to be removed before the operations relating to the preparation of the meat for curing.

After said removal, the meat mass is placed in a suitable mould in which it undergoes compression which is maintained for a certain period, its purpose being both to compact the meat mass and give it the well known shape of deboned hams, and to ensure that inside it there remain no air quantities which could cause degeneration during the curing period.

It is immediately apparent that the operation involving the pressing and shaping of the ham in order to compact it, shape it and deaerate it perfectly is one of the most important and delicate of the entire processing cycle.

Said operation is at present carried out in steel moulds which are subjected to the action of a press of about $15.10^3$ Kg, after which the mould is locked in order to maintain said pressure therein for a time of up to 8 hours, which can be reduced to 4—6 hours if the mould is placed in cells at 2—4°C.

During this operation, and in particular during the hot months, drawbacks arise which mean that the operation has to be carried out with great care, and these negatively affect the quality of the finished product.

These drawbacks derive from the undesirable increase in temperature, especially in the outer zones of the ham, this temperature increase causing an excessive softening of the fatty parts which subsequently become yellow and have a strong tendency to become rancid.

This is the reason why during the hot months the ham shaping requires a longer time, both with regard to attaining the maximum pressure and with regard to the period for which said pressure is maintained.

Methods are known to shape pieces of fresh meat, by pressing them into a mould whose surface is hardly cooled to congelate the outer layer of the mass, one of these methods being disclosed in DE—A—2.256.078. Such methods are not available in ham processing because the outer layer of the hams must not be congelated, to avoid salt separation.

The present invention provides and protects a method for pressing, deaerating and shaping raw hams after removing the bone, which completely obviates the aforesaid drawbacks while presenting further important simultaneous advantages.

According to the invention, said method provides for the mould in which the ham is inserted and pressed to be internally refrigerated, in order to remove the quantity of heat substantially equal to the heat which is developed in the ham by effect of the compression, avoiding the freezing of the outer layers of the ham.

By means of said cooling, important results are obtained consisting in an improved compacting of the meat mass once shaped, an improved guarantee of perfect deaerating, and substantially a shorter time necessary for finishing the operation.

Moreover, the method according to the invention provides further valuable teachings, which are also worthy of protection.

In this respect, according to the method, the temperature difference between the ham and mould must advantageously lie between 5°C and 15°C.

The cooling rate suggested for each individual mould lies between 2000 and 2500 KCal/h, according to the ambient temperature.

If said refrigeration rate is maintained for the entire time of the operation, a strong cooling of the outer layers of the meat mass is firstly obtained, with total preservation of the fatty layers, followed by the total dispersion of the heat developed in the meat mass by the effect of the compression.

In this respect, almost all the heat deriving from the compression is developed at the end of the compression, this being the reason why during the first stage a type of pre-cooling of the outer layers is carried out.

By virtue of the aforesaid method, the surprising result has been obtained that if the mould is maintained at a temperature of between −5°C and −10°C, the time for which the ham is retained in the mould can be drastically reduced to a period of between 5 and 15 minutes, which in the most favourable cases can be close to 5 minutes.

It is superfluous at this point to emphasise the enormous advantages offered by the proposed method.

The number of moulds can in practice be reduced to just a few, as it is no longer necessary to keep them engaged for several hours.

The same applies to the space at present necessary for locating them, which is generally in cells at +2°C to +4°C.

It is also possible to use multi-station presses, for example of the turntable type, which provide continuity for the pressing operation.

This is all accompanied by greater compactness and thus better workability of the meat which is presented perfectly deaerated.

The operational and constructional merits and characteristics of the invention will be more apparent from the detailed description given hereinafter, which refers to the means for carrying out the method which are also to be protected by the present patent.

A preferred embodiment of said means is illustrated and described obviously by way of non-limiting example.

Figure 1 is a partly sectional diagrammatic view of an installation for pressing and shaping hams.

Figure 2 is a vertical section through a mould according to the invention.

Figure 3 is a view from below of the upper mould portion of the mould.

Figure 4 is a view from above of the lower mould portion of said mould.

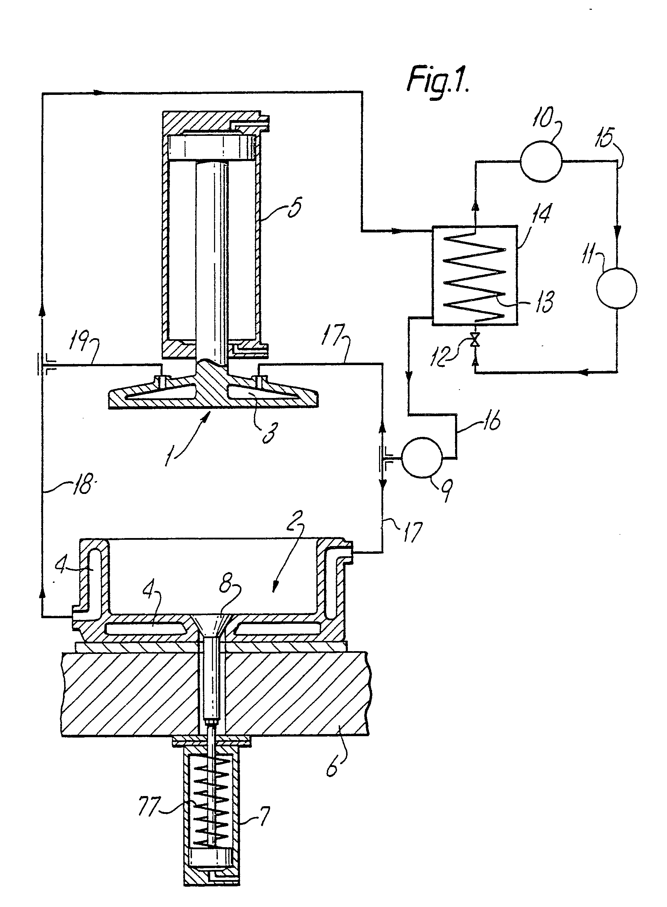

Figure 1 is a diagrammatic illustration of an installation according to the invention for pressing and shaping deboned hams, comprising a refrigeration circuit and a shaping mould 1—2 which is connected to said circuit as described hereinafter.

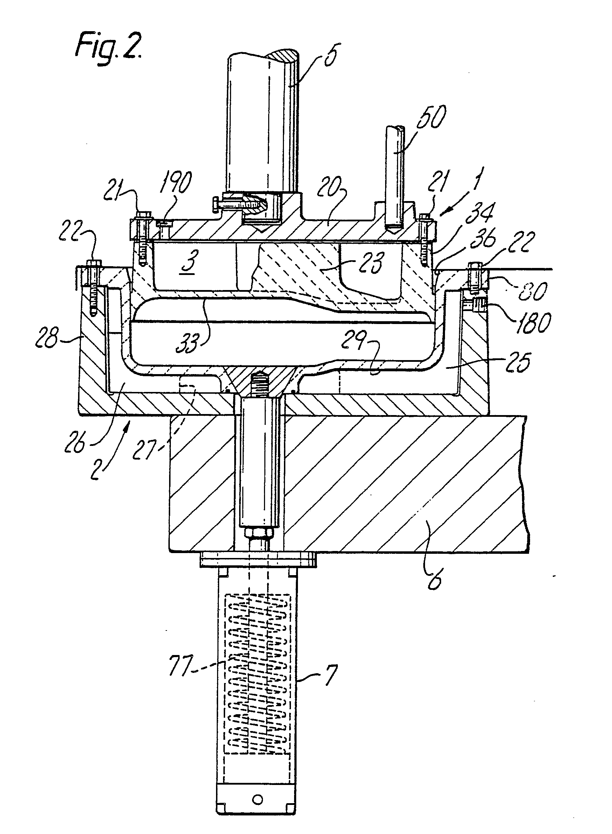

At this point, it should be noted that Figure 1 relates to a simplified embodiment of the invention, and for this reason the mould 1—2, or rather its two essential component parts, have been shown diagrammatically. A further preferred embodiment of the mould is shown clearly in Figures 2 to 4.

Figure 1 shows an upper mould portion 1 of a mould according to the invention, comprising an internal interspace or duct 3.

Said upper mould portion is driven, according to the operating cycle used, with rectilinear up-and-down motion by an overlying double acting cylinder-piston unit 5 which is suitably supported.

Below the upper mould portion 1 there is provided, fixed to a support 6, a lower mould portion 2 which comprises a cavity for receiving the deboned hams to be shaped and which is provided with an internal interspace 4.

The central zone of the base of said cavity is occupied by an expelling member 8 of cone-frustum shape, of which the major base, facing upwards, is coplanar with said base when the expelling member is completely lowered.

The expelling member is controlled by the rod of a single acting cylinder-piston unit 7, which is fixed below the support 6, and of which the return is controlled by the spring 77.

To the side of the mould 1—2 there is provided a closed-circuit cooling system 15 through which a suitable primary refrigerant fluid is made to circulate by a compressor 10.

In said system 15, and downstream of the compressor 10, there are provided a condenser 11, a throttle valve 12 and an evaporator coil 13 which is housed in the chamber of a heat exchanger 14.

From the base of this latter there branches a service conduit 16 connected to the suction side of a pump 9 arranged to circulate a suitable secondary refrigerant fluid through the interspaces 3, 4 of the mould 1—2.

For this purpose, the delivery side of the pump 9 forks into two feed conduits 17 which open at the inlets of the interspaces 3, 4.

Finally, from the outlet mouth of the interspace 4 there branches a return conduit 18 which opens at the top of the cooling chamber 14, and into which there is connected the return conduit 19 of the interspace 3.

According to a preferred embodiment as shown in Figures 2—4, the upper mould portion 1 comprises a punch 33 provided lowerly with a cavity, the configuration of which corresponds substantially to that of the upper half of a ham when lying flat.

The punch 33 is provided upperly with a perimetral wall 34 on which a cover 20 is fixed with screws 21 by way of a suitable gasket.

From said cover there rises a vertical guide bar 50 arranged to ensure the correct operational positioning of the upper mould member 1 during its vertical movements.

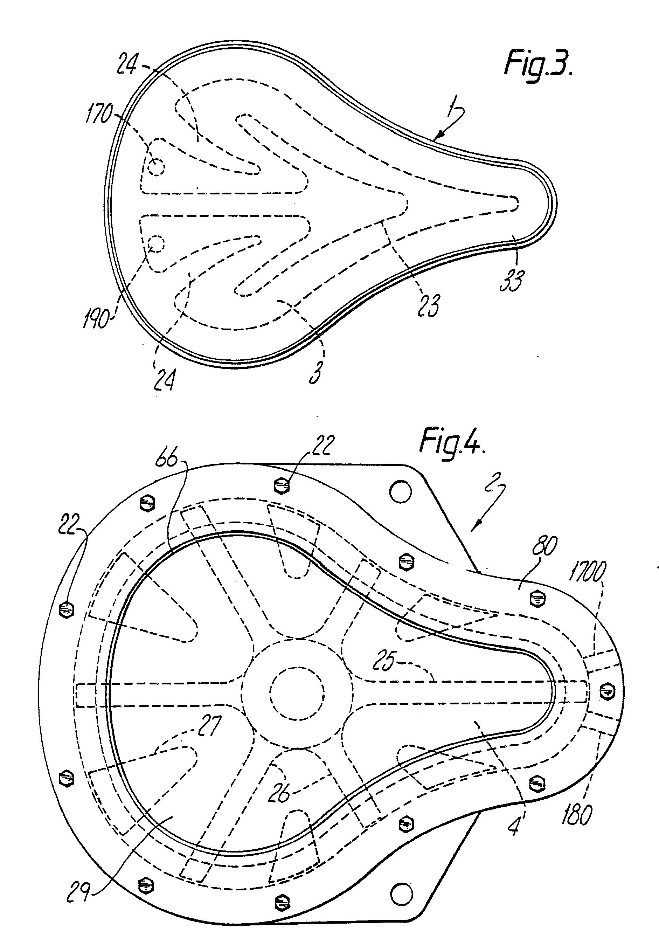

Straddling the longitudinal axis of symmetry of this latter, there is provided a rib 23, better seen in Figure 3, which branches from the perimetral wall 34 where the punch 33 is widest.

When viewed in plan, the rib 23 is shaped similar to an arrow with its point separated from the opposing end of the punch 33 by a certain distance.

From the same zone of the wall 34 there branch two further ribs 24, of arcuate shape when viewed in plan, these being symmetrically disposed about the shaft of said arrow-shaped rib and being partly inserted between the shaft and the limbs of this latter rib.

The ribs 23 and 24 rise from the upper face of the punch 33 to substantially reach the level of the perimetral wall 34.

In this manner a duct 3 is defined in the upper mould portion 1 for the circulation of the said secondary refrigerant fluid, said duct being connected to the feed conduit 17 and return conduit 19 respectively by way of two ports 170 and 190 provided in the cover 20 (Figure 3).

Said ports 170 and 190 lie between the central portion of the arrow-shaped rib 23 and the two arcuate ribs 24, so that the secondary refrigerant fluid is compelled to take a serpentine path which extends along the entire surface development of the upper mould portion 1.

The lower mould portion 2 comprises a hollow casing 28 which is fixed to the support 6 and in which there is inserted a die 29 arranged to receive the deboned hams which are to be shaped in cooperation with the overlying mobile punch 33.

Said die 29 is in the form of an upwardly open metal shell, the mouth of which has a configuration conjugate with that of the perimetral profile of the punch 33.

Correct insertion of the punch 33 into the shell 29 is ensured by a perimetral flaring 66 provided at the mouth of this latter.

Externally to said mouth, the shell 29 is provided with a perimetral ledge 80 which is fixed to the top of the casing 28 by screws 22, by way of a suitable gasket.

From the outer surface of the shell 29 which is inserted into the casing 28, there branches a rib 26 of stellar configuration when viewed in plan (Figure 4), its component elements extending until they practically make contact with the inner cylindrical surface and the base of the casing 28.

As is clearly seen in Figure 2, only that radial bar 25 located in proximity to the narrowest part of the shell 29 and straddling the longitudinal axis thereof is connected to the ledge of said shell, whereas all the other radial bars 26 are separated from said ledge 80 by a certain distance.

In addition, from the outer surface of the shell 29 there branch further ribs 27 which extend until they practically make contact with the inner cylindrical surface and base of the casing 28, and are each disposed between two adjacent radial bars 26, to terminate at a convenient distance from the common point where all the radial bars 25, 26 intersect (Figures 2 and 4).

In this manner, a duct 4 is defined in the lower mould member 2 for circulating the secondary refrigerant fluid, said duct being connected to the feed conduit 17 and return conduit 18 through two ports 1700 and 180 respectively, provided in the highest part of the narrowest zone of the casing 28, on one side and the other of the radial bar 25.

From the aforegoing, it is apparent that inside the lower mould portion 2, the secondary refrigerant fluid is compelled to take a serpentine path which includes the entire surface extension of the lower mould portion 2. Said serpentine path is formed by virtue of the particular shape of the ribs 26 and 27, both orthogonally and coplanar to the plane in which said lower mould portion 2 lies.

At this point it should be noted that the fact that a single mould is shown in the refrigeration system of Figure 1 must in no way be considered as limiting in that said system can well be designed with a capacity sufficient to serve a machine or apparatus with several shaping moulds, for example of the turntable or other type.

When said refrigeration system has reached steady operation such that the mould portions 1 and 2 of the mould are cooled, each ham, after deboning and sewing up, is loaded into the lower mould portion 2, which has its expelling member 8 lowered, after which the punch 33 is made to descend in order to act on the meat mass with sufficient pressure.

In the method according to the invention, the temperature difference between the hams to be shaped and the mould must advantageously lie between 5°C and 15°C, the ham and mould temperatures being preferably between 2 and 12°C and between −4 and −10°C respectively.

In addition, the refrigeration rate of the system is kept between 2000 and 2500 Kcal/h for each mould, depending both on the size of the hams and on the ambient temperature.

According to the proposed method, said operating conditions are maintained approximately constant for the entire shaping period so that at the beginning the outer layers of the meat mass become strongly cooled thus preventing the fatty parts from becoming rancid, following which, i.e. when all the heat due to the compression has been developed, there is complete removal of said heat.

Moreover, with the aforesaid operating conditions it is possible to attain total removal of the heat produced by the compression. The shaping of the ham is completed in a very short time, of the order of 5—15 minutes when operating conditions are most favourable, against a corresponding period of 6—8 hours with the traditional method.

Results similar to those of known shaping methods are obtained in such a short time period, with obvious relative advantages.

In addition, there is improved compactness and thus better workability of the deboned meat mass, perfect deaeration thereof and the absence of rancid fatty parts.

It should also be noted that in this manner it is no longer necessary to dispose the moulds containing the compressed deboned hams in holding cells, the number of moulds and the space necessary for them being drastically reduced.

After the compression shaping stage with simultaneous cooling, i.e. 5—15 minutes after the deboned ham has been loaded into the mould, the punch 33 is lifted and the expelling member 8 is almost simultaneously raised, after which the ham thus shaped can be fed to subsequent processing operations.

The expelling member 8 is then repositioned on the base of the die 29, and a new cycle begins.

The invention is not limited to the single embodiment heretofore described, and modifications and improvements can be made thereto within the scope of the appendant claims.

**Claims**

1. A method for shaping, pressing and deaerating raw hams after deboning and sewing, in which a single ham is inserted at room temperature of about 12°C to 2°C in a mould, and is then subjected to the action of a press applying a load of about $15.10^3$ Kg. on the whole mould containing said ham, characterized in that said surfaces of the mould are at a temperature of between −4°C and −10°C, the temperature difference between the ham to be shaped and the mould lying thereby between 5°C and 15°C, and that the ham is kept under pressure for 5 to 15 minutes.

2. An apparatus for shaping and deaerating raw, hams after deboning and sewing, of the type comprising a mould into which the ham is inserted, to be subjected to a pressure, the said mould consisting of a bottom die (2) and punch (1) wherein the die and punch comprise an interspace (3—4) in positions corresponding to the surfaces designed to come into contact with the ham surfaces through which a refrigerant flows, characterized in that the bottom die (2) and the punch (1) are each constituted by two parts (34, 20), defining a sealed interspace (4), (3), at least from one of which there branches a set of ribs (23, 24), (25, 26, 27) which define a sinuous channel which covers the entire surface of the mould, along which the refrigerant liquid is obliged to flow, one (23, 25) of said ribs being arranged to interrupt said sinuous channel respectively upstream and downstream of the feed and discharge ports thereof.

## Patentansprüche

1. Verfahren zum Formgeben, Pressen und Entlüften von rohen Schinken nach dem Ausbeinen und Nähen, wobei ein einzelner Schinken Bei Raumtemperatur von ungefähr 12°C bis 2°C in eine Formpresse eingebracht wird und dann der Wirkung einer Presse unterworfen wird, die eine Belastung von ungefähr 15.10³ kg auf die gesamte den Schinken enthaltenden Formpresse aufbringt, dadurch gekennzeichnet, daß die Oberflächen der Formpresse in einem Temperaturbereich zwischen −4°C und −10°C gehalten werden, wodurch die Temperaturdifferenz zwischen dem zu formenden Schinken und der Formpresse zwischen 5°C und 15°C liegt, und daß der Schinken für 5 bis 15 Minuten unter Druck gehalten wird.

2. Vorrichtung zum Formgeben und Entlüften von rohen Schinken nach einem Ausbeinen und Nähen in einer Formpresse, in der der Schinken zur Druckbehandlung eingelegt ist, wobei die Formpresse ein Untergesenk (2) und einen Oberstempel (1) aufweist, wobei dsa Untergesenk und der Oberstempel einen Zwischenraum (3—4) in Positionen besitzen, die mit den mit den Schinkenflächen in Kontakt zu bringenden Oberflächen korrespondieren, wobei durch den Zwischenraum ein Kühlmittel fließt, dadurch gekenzeichnet, daß das Untergesenk (2) und der Oberstempel (1) jeweils aus zwei Teilen (34, 20) gebildet sind, die einen abgedichteten Zwischenraum (4), (3) bilden, wobei wenigstens eines dieser beiden Teile einen Satz Rippen (23, 24), (25, 26, 27) besitzt, die einen gewundenen Kanal definieren, der die gesamte Oberfläche der Formpresse überdeckt, wobei entlang dieser Kanäle die Kühlmittelflüssigkeit fließen muß, und wobei eine der genannten Rippen (23, 24) so angeordnet ist, daß sie den gewundenen Kanal jeweils stromaufwärts und stromabwärts von den Zulauf- und Auslaßöffnungen unterbricht.

## Revendications

1. Procédé pour façonner, presser et désaérer des jambons crus après le désossement et la couture, dans lequel un seul jambon est disposé dans un moule, à température ambiante d'environ 12°C à 2°C, et est alors soumis à l'action d'une presse appliquant une charge d'environ 15.10³ kg sur l'ensemble du moule contenant ledit jambon, ledit procédé étant caractérisé en ce que:

— lesdites surfaces du moule sont à une température comprise entre −4°C et −10°C, la différence de température entre le jambon à façonner et le moule s'étendant, de ce fait, entre 5°C et 15°C,
— le jambon est maintenu sous pression pendant un intervalle de temps d'environ 5 à 15 minutes.

2. Appareil pour façonner et désaérer des jambons crus après le désossement et la couture du type comprenant un moule à l'intérieur duquel le jambon est disposé, de façon à être soumis à une pression, ledit moule consistant en une matrice (2) formant fond et en un poinçon (1), ledit poinçon et ladite matrice comprenant un espace intermédiaire (3, 4) dont l'emplacement correspond aux surfaces destinées à venir en contact avec les surfaces du jambon et à travers lequel s'écoule un réfrigérant, ledit appareil étant caractérisé en ce que la matrice (2) formant fond et le poinçon (1) sont constitués chacun, de deux parties (34, 20) définissant un espace intermédiaire étanche (4, 3) à partir de l'un au moins desquels s'étend une série de nervures (23, 24), (25, 26, 27) qui définissent un canal sinuex qui couvre la surface entière du moule et le long duquel doit s'écouler le liquide réfrigérant, l'une (23, 25) desdites nervures étant disposée de façon à interrompre ledit canal sinueux, respectivement, en amont et en aval de l'alimentation et des orifices d'évacuation.

**0 057 478**

*Fig.1.*

Fig. 2.

Fig.3.

Fig.4.